# EUROPEAN PATENT SPECIFICATION

(11) **EP 3 009 670 B1**
(45) Date of publication and mention of the grant of the patent: **03.01.2018**
(21) Application number: 14189067.3
(22) Date of filing: 15.10.2014
(51) Int. Cl.: F03D 7/02, F03D 7/04

(54) **Method to control the operation of a wind energy installation, including generating a 3D wind speed model, and wind energy installation**
Verfahren zur Steuerung des Betriebs einer Windenergieanlage, einschliesslich der Erzeugung eines 3D-Windgeschwindigkeits-Modells, sowie Windenergieanlage
Procédé pour commander le fonctionnement d'une installation d'énergie éolienne, comprenant la création d'un modèle 3D de la vitesse du vent, et installation correspondante

(43) Date of publication of application: 20.04.2016
(73) Proprietor: Siemens Aktiengesellschaft, 80333 München (DE)
(72) Inventor: Egedal, Per, 7400 Herning (DK)

(56) References cited:
- EP-A2- 2 667 022
- US-A1- 2002 084 655

## Description

The invention relates to a method to control the operation of a wind energy installation and relates even to a wind energy installation.

The operation of a wind energy installation, like a wind turbine, is managed by a controller. The controller takes care for a controlled production of electrical energy in view to a predicted live time of the whole wind turbine. Thus the controller is even implemented for the protection of wind turbines components against damages.

The controller uses different parameters and signals for these tasks, such as
- actual wind conditions (like turbulences, wind speed, etc),
- actual loads, which are acting on wind turbine components like blades or the drive train,
- pitch angle of the blades,
- yaw angle of the nacelle,
- the electrical power, which is generated by the generator of the wind turbine,
- the rpm of the rotor of the wind turbine,
- etc.

Wind turbine controllers according to the prior art are operated in a reactive manner as their control actions are based on an evaluation of events, which happened in the past.

Thus the control actions are delayed in time as those events and incidents needs to be evaluated over a certain period of time to generate appropriate control actions in turn.

The controller needs to manage the operation of a wind turbine in view to rapid changes in the natural environment of the wind turbine. For example the wind turbine needs to cope with rapid changes in the wind speed, in the turbulences, etc., thus specific controller commands are generated by the controller.

The controller even needs to manage rapid changes of wind turbine components. For example the controller needs to address a sudden temperature rise, which occurs in a wind turbine due to a fault of a component, etc).

A control strategy is implemented in the controller, while the strategy is based on so called "safety margins" of wind turbine parameters. The safety margins are selected in a way that a stable wind turbine operation is ensured.

Based on the control strategy an appropriate equilibrium is kept between a guaranteed live time of wind turbine components and a guaranteed electrical power output performance of the wind turbine.

The controller actions are kept in certain and given limits due to the predetermined and fixed safety margins. Thus the controller operates in a not optimized manner in view to reaction-time and in view to the specific rapid changes.

Document EP 2 667 022 A2 describes a method and a system for wind velocity field measurements on a wind farm. The wind farm comprises a plurality of wind turbines, which are spatially distributed. The wind velocity field is determined by acquiring data via measurement instruments in view to respective paths between selected pairs of turbines. Based on the acquired data the wind velocity field is determined.

US 2002 008 4655 A1 describes a system and a method for enhancing the commercial value of electrical power produced. The invention includes a communications infrastructure and a coordination mechanism for establishing a relationship with another power production facility such that when excess electrical power is produced by a wind turbine facility, the excess may be provided to the power grid while the other energy production facility cuts back on its output production by a corresponding amount. A tracking mechanism keeps track of the amount of potential energy that was not expended at the other facility and places this amount in a virtual energy storage account.

It is the aim of the invention to provide an improved method to control a wind energy installation in an optimized manner and to provide an improved wind energy installation.

This aim is reached by the features of the independent claims.

Improved configurations and embodiments are addressed by the dependent claims.

The invention addresses the control of a single wind turbine as well as the control of wind turbines of a wind farm. Thus the common term "wind energy installation" is used.

According to the invention Method to control the operation of a wind energy installation and wind energy installation

The invention relates to a control of the operation of a wind energy installation. Different wind speeds of the wind in front of the wind energy installation are measured in a given predetermined measurement volume. Data are gathered, which reflect the measured wind speeds. The data are used to generate a three-dimensional wind speed model. The three-dimensional wind speed model is used to predict a wind speed change at the wind energy installation in reference to a pre-determined point of time. A control command is generated based on the predicted wind speed change and based on an actual wind speed, which is measured at the wind energy installation, preferably at the pre-determined point of time. The control command is used to control the operation of the wind energy installation.

The measurement volume is arranged and dimensioned in front of the wind turbine in a way, that the incoming wind passes the measurement volume before it acts on the wind energy installation (wind turbine) and its rotor.

The wind speed data are preferably actual values and they are used to generate the three-dimensional wind speed model. The wind speed model uses these data in real time to calibrate and learn in dependency of the time about the development of the wind speed and about the development of wind turbulences as well.

The measurement volume addressed above is relative to pre-determined distance which is in turn related to a prediction time. The prediction time is used for the determination of an event, which will hit the wind turbine when the prediction time lapsed.

The prediction time is referred to a pre-determined point of time in the claims and describes thus even a time interval between events happening in a close future.

A prediction time of 10s up to 20s is preferred. These time values are equal to distances of approximately 100m up to 400m. The distance is measured from the front of the wind energy installation (i.e. the hub-position) towards the incoming wind.

Additionally the distance and thus the size of the measurement volume can be chosen in a way that an increased amount of data and information is gathered to improve the quality of the prediction.

The three-dimensional wind speed model might include time-, distance-, position and wind speed information thus turbulence bobbles can be tracked and predicted in their development.

By predicting the development of the turbulence bobbles precise prediction of wind gusts acting on single wind energy installations can be made.

The three-dimensional wind speed model is used to predict changes in wind speed and/or changes in turbulences. These changes are predicted in reference to a pre-determined time-period and/or distance as described above.

In a preferred configuration the data are gathered by using a LIDAR- ("Light Detection And Ranging") and/or a SODAR-("Sound/Sonic Detecting And Ranging") and/or a RADAR-system as remote-monitoring-system and their respective signals.

As indicated by the "and/or" combination a pure respective system or a combination of the given systems above could be used to result in the remote-monitoring-system.

The respective signal emitting/receiving part of the respective system is preferably located at the hub of a wind turbine or at the rotor-blades, which are attached to the hub.

The signals are processed to generate a three-dimensional grid for the wind speed model.

The model could include a information about a grid of wind speeds or information about a so called "mean wind speed" as well as information about a number of detected turbulence bobbles, including their size, their relative or absolute movement and their speed in view to the wind energy installation site, etc.

In a preferred configuration the change in the wind speed is predicted for a time-period, which is between 10 seconds and 20 seconds, which is equal to a distance of approximately 100m up to 400m in reference to the wind energy installation site.

If a single wind turbine is object of the controlled operation the actual wind speed is measured at or at least close to that respective wind turbine.

If a wind turbine of a wind farm is object of the controlled operation the actual wind speed is measured at or at least close to the wind turbine. Please note that in case of a control of wind turbines of a wind farm data are gathered, which reflect the wind speed development in front of the whole wind farm. The data are gathered starting from a given distance in relation to the front of the wind energy installation (i.e. wind farm) and are even gathered all along the way towards the wind energy installation (wind farm).
Thus the distance is a relevant parameter for the size of the chosen measurement volume.

In a preferred configuration even wind speed data are gathered for a measurement volume behind a respective wind energy installation. Thus changes of the wind speed in a wind front, which passed the wind energy installation, can be tracked. That kind of information can be used to predict the behavior of a wind front passing a wind farm.

All these data are used in the three-dimensional wind model to recreate, model and reproduce even big wind structures, which are approaching and passing the wind energy installation.

In a preferred configuration the three-dimensional wind speed model, which is used to predict changes in wind speed, is continuously aligned and trained by taking into account the actual and effective wind speed, which is experienced by the wind energy installation.

The term "effective wind speed" describes the normalized wind speed acting on the rotor of the wind energy installation. The effective wind speed will result in a specific power production. The effective wind speed is that wind speed which corresponds to a specific power production on a power vs wind curve.

Thus an improved and quite precise prediction model is reached by the self-training capability.

The invention allows the harvesting of an additional amount of "extra" wind energy by the wind turbine as the control is even based on predicted wind conditions (i.e. wind speed). Thus the control actions are as close as possible to the actual wind conditions, taking into account expected future wind conditions and their changes.

The invention results in a reduced time of reaction for the controller, thus control actions are generated in due time. They are generated as close as possible to changes in the wind conditions, even if they are rapid.

The invention results in improved and actual control actions, which are generated by the controller. Thus the live time of wind turbine components is prolonged while even the amount of produced electrical power is optimized.

The invention results in harvesting more energy in that transition region, where it goes in and out of saturation, by using the rotor as an energy buffer.
Before a wind gust the invention allows taking out of kinetic energy from the wind energy installation. The kinetic energy can be restored some seconds after by the gust. Just before the wind speed drops (where the turbine is in saturation at nominal power), it increases the rotor speed to capture more kinetic energy, and hereby it can keep the production and nominal power longer than today.

The invention is shown in more detail by help of figures.
FIG 1 shows the steps of the invention as a signal flow chart,
FIG 2 shows signals and parameters of a wind turbine, which is equipped and operated with the invention, while
FIG 3 - 7 describe the basic principle of the predictive control and show details of the measurement volume.

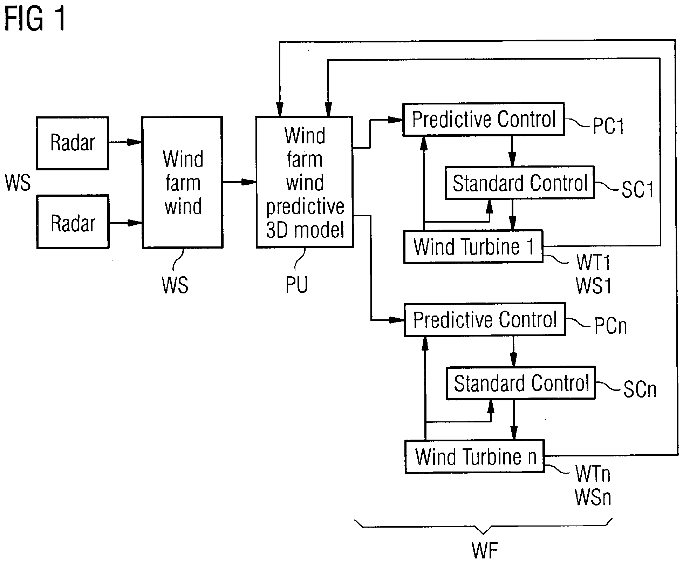

FIG 1 shows the steps of the invention as a signal flow chart for wind turbines WT1 to WTn of a wind farm WF.

The wind speed WS over the entire wind farm WF is measured by radar, which is used as remote monitoring system 1.

The radar signals are processed by a prediction unit PU and results in a three-dimensional grid of a model of wind speeds.

The predicted model of wind speeds is used at the wind turbines WT1 up to WTn in respective predictive controls PC1 up to PCn. These predictive controls PC1 up to PCn use the wind speed model as well as actual wind speeds WS1 up to WSn, which are measured at each of the wind turbines WT1 up to WTn. Based on them the change in the wind speed over the entire wind farm within the next 10 up to 20 seconds can be predicted.

The prediction of the wind speeds is continuously aligned and trained by help of the actual respective wind speeds WS1 up to WSn sensed at the wind turbines WT1 up to WTn. Thus a self-learning system is provided, which is based on the remote sensed wind speed WS as well as on the actual wind speeds WS1 up to WSn.

The predictive controls PC1 up to PCn of the wind turbines WT1 up to WTn calls for certain changes at the standard turbine controllers SC1 up to SCn.

The applied rules for those changes are quite simple, i.e. just before a gust hits the respective wind turbine WT1 its rotor speed is decreased. Accordingly its rotor speed is increased just before the wind speed WS1 is going down.

The applied rules for those changes even might be more advanced and sophisticated, i.e. an optimum rotational speed of the rotor and an optimum power demand can be found for a wind turbine model by using an optimized and accurate three-dimensional wind speed model.

The standard controllers SC1 up to SCn, which are respectively aligned to the wind turbines WT1 up to WTn, control the pitch angle and the generator torque or the electrical power of the dedicated wind turbine with respect to the actual states of the wind turbine and taking into account the changes, which are requested by the predictive controls PC1 up to PCn.

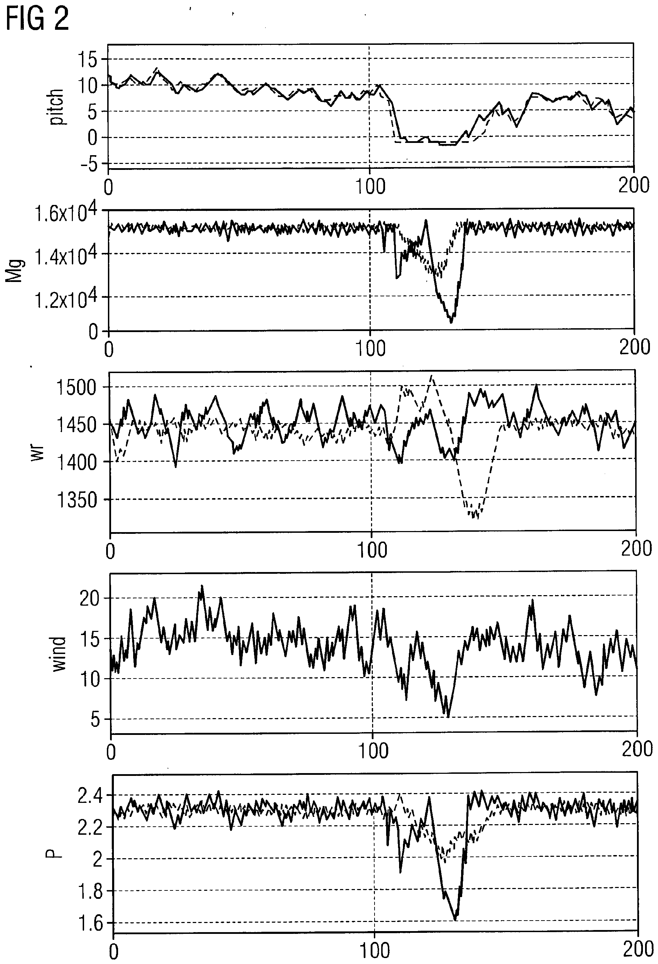

FIG 2 shows signals and parameters of a wind turbine, which is equipped and operated with the invention.

The simulation below, shows how the controller before the wind speed drops, increase the rotor speed to harvest more energy, and decrease the rotor speed just before the wind speed increases, to take out kinetic energy.

The horizontal axis of all graphs show time in seconds while the vertical axis
- of the first graph on the top shows the pitch angle of the rotor blade of a wind turbine,
- of the second graph shows the generator torque Mg,
- of the third graph shows the rotor speed wr,
- of the fourth graph shows the effective wind speed, and
- of the fifth graph shows the electrical power P, which is produced by the wind turbine.

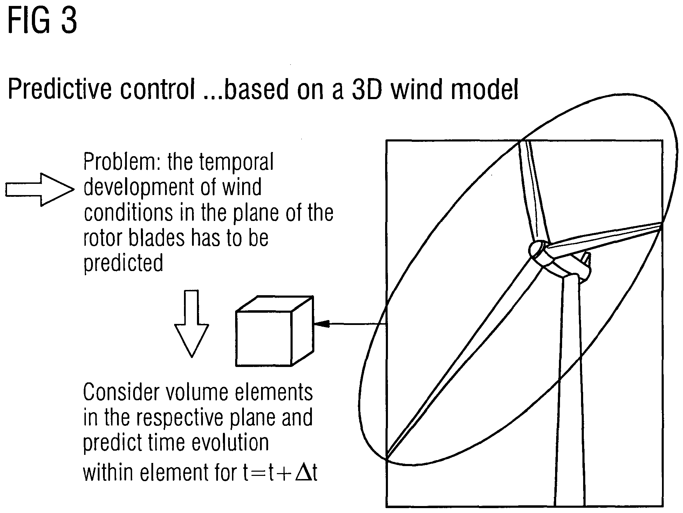

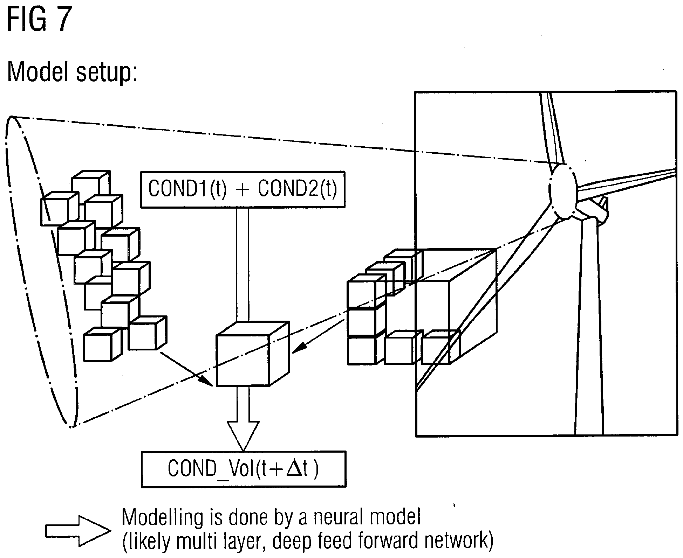

FIG 3 up to FIG 7 describe the basic principle of the predictive control and show details of the measurement volume.

Fig 3 show a wind turbine and a plane, which is defined by the turning rotor blades.

For a predictive wind turbine control, which is based on a three dimensional wind model, there is the problem that the temporal development of wind conditions in the plane of the turning rotor blades has to be predicted.

Thus volume elements (i.e. cubical elements) are considered in the respective plane and time evolution is predicted for the element for the point of time t and for the point of time t+Δt.

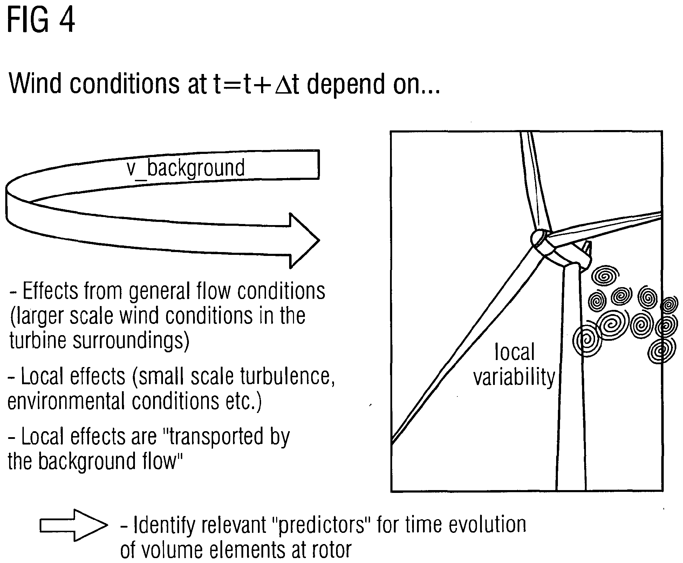

FIG 4 shows the wind turbine of FIG 3 with local wind-variabilities.
The wind conditions at t= t+Δt depend on the so called "v_background", thus these effects needs to be taken into account:
- Effects from general flow conditions (larger scale wind conditions in the turbine surroundings),
- Local effects (small scale turbulence, environmental conditions etc.)
- Local effects are "transported by the background flow".

Based on this relevant predictors for a time evolution of volume elements at rotor are identified.

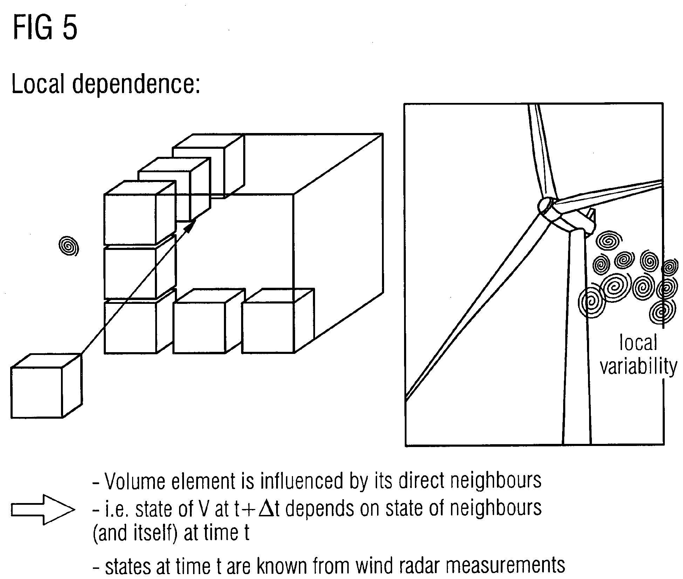

FIG 5 shows details in view to the local effects and dependencies.

It is noted that a volume element is influenced by its direct neighbours.

For example the state of a volume element at the point of time t+Δt depends on the state of its neighbor volume elements and of itself state at the given point of time t.
The states of the volume elements at the point of time t are known from wind radar measurements for example.

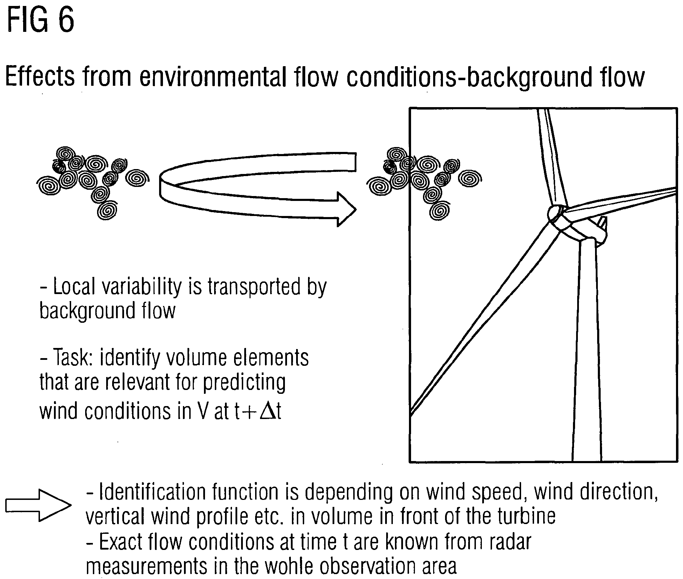

FIG 6 shows effects from environmental flow conditions - the so called background flow.

The local variability in view to the wind turbine and its site is transported by the background flow. It is the task to identify volume elements that are relevant for predicting wind conditions in the volume element at the point of time t+Δt. The resulting identification function is depending on wind speed, wind direction, vertical wind profile etc. in the volume element, which is in front of the wind turbine. The exact flow conditions at the point of time t are known from radar measurements in the whole observation area.

FIG 7 shows the model setup. The modeling is done by a neural model (likely multi layer, deep feed forward network).

Conditions COND1(t) refers to the conditions in view to the "wind-speed-prediction" volume.

The conditions COND2(t) refers to the conditions close to the wind turbine (i.e. the wind speed conditions which occur in a volume, while this volume is close to the hub of the wind turbine). Thus the conditions COND2(t) are preferably based on actual wind speed measurements, which are done at the hub.

Both conditions COND1(t) and COND2(t) are combined to result in a common condition COND_Vol(t+Δt) of the respective volume element(s) .

The wind turbine controller operates the wind turbine based on the common condition COND_Vol(t+Δt).

## Claims

1. Method to control the operation of a wind turbine as wind energy installation,
- wherein different wind speeds of the wind in front of the wind energy installation are measured in a given predetermined measurement volume,
- wherein data are gathered, which reflect the measured wind speeds,
- wherein the data are used to generate a three-dimensional wind speed model,
- wherein the three-dimensional wind speed model is used to predict a wind speed change at the wind energy installation in reference to a pre-determined point of time,
- wherein a control command is generated based on the predicted wind speed change and based on an actual wind speed, which is measured at the wind energy installation, and
- wherein the control command is used to control the operation of the wind energy installation,
**characterized by** comprising the steps of:
- volume elements are considered in the plane of the turning rotor blades,
- a time evolution is predicted for an volume element for a first point of time (t) and for a second point of time (t+Δt), while the second point of time (t+Δt) is subsequent to the first point of time (t),
- wherein large scale wind conditions in the surrounding of the wind energy installation and wherein small scale turbulences and conditions of the environment are taken into account as local variability for wind conditions at the second point of time (t+Δt),
- wherein relevant predictors for the time evolution of the volume elements at the rotor plane are identified based on the local variability,
- wherein the three-dimensional wind speed model is based on a volume element, which is influenced by its direct neighbors, thus a state of the volume element at the second point of time (t+Δt) depends on the state of its neighbor volume elements and of its own state at the first point of time (t), while the states of the volume elements at the first point of time (t) are known from wind radar measurements,
- wherein volume elements that are relevant for predicting wind conditions in the volume element at the second point of time (t+Δt) are identified, while a resulting identification function is depending on wind speed, wind direction and the vertical wind profile in the volume element, which is in front of the wind turbine, and while exact flow conditions at the first point of time (t) are known from radar measurements in the observation area,
- wherein a model setup is done by using a neural model,
- wherein the model setup result in a common condition (COND_Vol(t+Δt)) of the respective volume element(s) at the second point of time (t+ Δt),
- while first and second conditions (COND1(t), COND2(t)) at the first point of time (t) are combined to result in the common condition (COND_Vol(t+Δt)) of the respective volume element at the second point of time (t+ Δt),
- while the first conditions (COND1(t)) at the first point of time (t) refer to the conditions in view to the wind-speed-prediction volume,
- while the second conditions (COND2(t)) at the first point of time (t) refer to the conditions close to the wind turbine,
- while the second conditions (COND2(t)) refer to the wind speed conditions, which occur in a volume, which is close to the hub of the wind turbine, and thus are based on actual wind speed measurements, which are done at the hub, and
- wherein the wind turbine controller operates the wind turbine based on the common condition (COND_Vol(t+Δt)).

2. Method according to claim 1, wherein the change in the wind speed is predicted for a time-period, which is between 5 seconds and 20 seconds.

3. Method according to one of the preceding claims, wherein the three-dimensional wind speed model, which is used to predict the wind speed change, is continuously aligned and trained by taking into account the actual wind speed thus an improved prediction model is achieved.

4. Wind turbine as wind energy installation, which is prepared and arranged to perform the method according to one of the claims 1 to 3.

## Patentansprüche

1. Verfahren zum Steuern des Betriebs einer Windturbine als Windenergieanlage,
- wobei unterschiedliche Windgeschwindigkeiten des Winds vor der Windenergieanlage in einem gegebenen vorbestimmten Messvolumen gemessen werden,
- wobei Daten gesammelt werden, die die gemessenen Windgeschwindigkeiten widerspiegeln,
- wobei die Daten zum Erzeugen eines dreidimensionalen Windgeschwindigkeitsmodells verwendet werden,
- wobei das dreidimensionale Windgeschwindigkeitsmodell zum Prognostizieren einer Windgeschwindigkeitsänderung an der Windenergieanlage in Bezug auf einen vorbestimmten Zeitpunkt verwendet wird,
- wobei auf der Grundlage der prognostizierten Windgeschwindigkeitsänderung und einer Ist-Windgeschwindigkeit, die an der Windenergieanlage gemessen wird, ein Steuerbefehl erzeugt wird, und
- wobei der Steuerbefehl zum Steuern des Betriebs der Windenergieanlage verwendet wird,
**dadurch gekennzeichnet, dass** es die folgenden Schritte umfasst:
- es werden Volumenelemente in der Ebene der sich drehenden Rotorblätter berücksichtigt,
- es wird eine zeitliche Entwicklung für ein Volumenelement für einen ersten Zeitpunkt (t) und einen zweiten Zeitpunkt (t+Δt) prognostiziert, wobei der zweite Zeitpunkt (t+Δt) auf den ersten Zeitpunkt (t) folgt,
- wobei Windbedingungen im großen Maßstab im Umfeld der Windenergieanlage und Turbulenzen und Bedingungen im kleinen Maßstab in der Umgebung als örtliche Variabilität für Windbedingungen zum zweiten Zeitpunkt (t+Δt) berücksichtigt werden,
- wobei relevante Prädiktoren für die zeitliche Entwicklung der Volumenelemente in der Rotorebene auf der Grundlage der örtlichen Variabilität identifiziert werden,
- wobei das dreidimensionale Windgeschwindigkeitsmodell auf einem Volumenelement basiert, das von seinen direkten Nachbarn beeinflusst wird, so dass ein Zustand des Volumenelements zum zweiten Zeitpunkt (t+Δt) von dem Zustand seiner benachbarten Volumenelemente und seinem eigenen Zustand zum ersten Zeitpunkt (t) abhängig ist, wobei die Zustände der Volumenelemente zum ersten Zeitpunkt (t) aus Windradarmessungen bekannt sind,
- wobei Volumenelemente identifiziert werden, die für das Prognostizieren von Windbedingungen in dem Volumenelement zum zweiten Zeitpunkt (t+Δt) relevant sind, wobei eine resultierende Identifikationsfunktion von der Windgeschwindigkeit, der Windrichtung und dem vertikalen Windprofil in dem Volumenelement abhängig ist, das sich vor der Windturbine befindet, und genaue Strömungsbedingungen zum ersten Zeitpunkt (t) aus Radarmessungen im Beobachtungsbereich bekannt sind,
- wobei eine Modellkonfiguration unter Verwendung eines neuronalen Modells erfolgt,
- wobei die Modellkonfiguration in einer gemeinsamen Bedingung (COND_Vol(t+Δt)) für das/die jeweilige/n Volumenelement/e zum zweiten Zeitpunkt (t+Δt) resultiert,
- wobei eine erste und eine zweite Bedingung (COND1(t), COND2(t)) zum ersten Zeitpunkt (t) kombiniert werden, so dass sie die gemeinsame Bedingung (COND_Vol(t+Δt)) für das jeweilige Volumenelement zum zweiten Zeitpunkt (t+Δt) ergeben,
- wobei sich die ersten Bedingungen (COND1(t)) zum ersten Zeitpunkt (t) auf die Bedingungen im Hinblick auf das Windgeschwindigkeitsprognosevolumen beziehen,
- wobei sich die zweiten Bedingungen (COND2(t)) zum ersten Zeitpunkt (t) auf die Bedingungen nahe bei der Windturbine beziehen,
- wobei sich die zweiten Bedingungen (COND2(t)) auf die Windgeschwindigkeitsbedingungen beziehen, die in einem Volumen auftreten, das sich nahe bei der Nabe der Windturbine befindet, und somit auf Ist-Windgeschwindigkeitsmessungen basieren, die an der Nabe erfolgen, und
- wobei die Windturbinensteuerung die Windturbine auf der Grundlage der gemeinsamen Bedingung (COND_Vol(t+Δt)) betreibt.

2. Verfahren nach Anspruch 1, wobei die Änderung der Windgeschwindigkeit für einen Zeitraum prognostiziert wird, der zwischen 5 und 20 Sekunden beträgt.

3. Verfahren nach einem der vorhergehenden Ansprüche, wobei das dreidimensionale Windgeschwindigkeitsmodell, das zum Prognostizieren der Windgeschwindigkeitsänderung verwendet wird, ständig angepasst und trainiert wird, indem die Ist-Windgeschwindigkeit berücksichtigt wird, wodurch ein besseres Prognosemodell erzielt wird.

4. Windturbine als Windenergieanlage, die so ausgelegt und angeordnet ist, dass sie das Verfahren nach einem der Ansprüche 1 bis 3 ausführt.

## Revendications

1. Procédé pour commander le fonctionnement d'une éolienne comme une installation d'énergie éolienne,
- dans lequel différentes vitesses de vent du vent en avant de l'installation d'énergie éolienne sont mesurées dans un volume de mesure donné prédéterminé,
- dans lequel des données sont réunies, qui reflètent les vitesses de vent mesurées,
- dans lequel les données sont utilisées pour générer un modèle tridimensionnel de vitesses de vent,
- dans lequel le modèle tridimensionnel de vitesses de vent est utilisé pour prédire un changement de vitesse de vent au niveau de l'installation d'énergie éolienne en référence à un point dans le temps prédéterminé,
- dans lequel une commande de contrôle est générée sur la base du changement de vitesse de vent prédit et sur la base d'une vitesse de vent réelle, qui est mesurée au niveau de l'installation d'énergie éolienne, et
- dans lequel la commande de contrôle est utilisée pour contrôler le fonctionnement de l'installation d'énergie éolienne,
**caractérisé en ce que** comprenant les étapes de :
- des éléments en volume sont pris en compte dans le plan des pales de rotor en rotation,
- une évolution temporelle est prédite pour un élément en volume pour un premier point dans le temps (t) et pour un deuxième point dans le temps (t+Δt), tandis que le deuxième point dans le temps (t+Δt) est subséquent au premier point dans le temps (t),
- dans lequel des conditions de vent à grande échelle dans les environs de l'installation d'énergie éolienne et dans lequel des turbulences et conditions à petite échelle de l'environnement sont prises en compte comme une variabilité locale pour les conditions de vent au deuxième point dans le temps (t+Δt),
- dans lequel des prédicteurs pertinents pour l'évolution dans le temps des éléments en volume au niveau du plan de rotor sont identifiés sur la base de la variabilité locale,
- dans lequel le modèle tridimensionnel de vitesses de vent est basé sur un élément en volume, qui est influencé par ses voisins directs, ainsi un état de l'élément en volume au deuxième point dans le temps (t+Δt) dépend de l'état de ses éléments en volume voisins et de son propre état au premier point dans le temps (t), tandis que les états des éléments en volume au premier point dans le temps (t) sont connus à partir de mesures radar de vent,
- dans lequel des éléments en volume qui sont pertinents pour prédire des conditions de vent dans l'élément en volume au deuxième point dans le temps (t+Δt) sont identifiés, tandis qu'une fonction d'identification résultante dépend de la vitesse de vent, de la direction de vent et du profil vertical de vent dans l'élément en volume, qui est en avant de l'éolienne, et tandis que des conditions de flux exactes au premier point dans le temps (t) sont connues à partir de mesures radar dans la zone d'observation,
- dans lequel une configuration de modèle est réalisée en utilisant un modèle neuronal,
- dans lequel la configuration de modèle résulte en une condition commune (COND_Vol(t+Δt)) du/des élément(s) en volume respectif(s) au deuxième point dans le temps (t+Δt),
- tandis que des premières et deuxièmes conditions (COND1(t), COND2(t)) au premier point dans le temps (t) sont combinées pour résulter en la condition commune (COND_Vol(t+Δt)) de l'élément en volume respectif au deuxième point dans le temps (t+Δt),
- tandis que les premières conditions (COND1(t)) au premier point dans le temps (t) renvoient aux conditions au vu du volume de prédiction de vitesse de vent,
- tandis que les deuxièmes conditions (COND2(t)) au premier point dans le temps (t) renvoient aux conditions à proximité de l'éolienne,
- tandis que les deuxièmes conditions (COND2(t)) renvoient aux conditions de vitesse de vent, qui surviennent dans un volume, qui est proche du moyeu de l'éolienne, et sont ainsi basées sur des mesures de vitesses de vent réelles, qui sont effectuées au niveau du moyeu, et
- dans lequel le contrôleur d'éolienne fait fonctionner l'éolienne sur la base de la condition commune (COND_Vol(t+Δt)).

2. Procédé selon la revendication 1, dans lequel le changement de la vitesse de vent est prédit pour une période de temps, qui est entre 5 secondes et 20 secondes.

3. Procédé selon l'une des revendications précédentes, dans lequel le modèle tridimensionnel de vitesses de vent, qui est utilisé pour prédire le changement de vitesse de vent, est de façon continue aligné et formé en prenant en compte la vitesse de vent réelle, ainsi un modèle de prédiction amélioré est réalisé.

4. Éolienne comme une installation d'énergie éolienne, qui est préparée et agencée pour mettre en oeuvre le procédé selon l'une des revendications 1 à 3.
